# EUROPEAN PATENT APPLICATION

(11) **EP 1 501 294 A2**
(43) Date of publication of application: **26.01.2005**
(21) Application number: 04016723.1
(22) Date of filing: 15.07.2004
(51) Int. Cl.: H04N 5/782

(54) **Data programming control apparatus, data programming control method, computer-readable recording medium in which data programming control program is recorded**

(30) Priority: 24.07.2003 JP 2003201024
(71) Applicant: Pioneer Corporation, Tokyo-to (JP)
(72) Inventor: Furuta, Hirotaka Pioneer Corporation, Tokorozawa-shi Saitama-ken (JP)
(74) Representative: Grünecker, Kinkeldey, Stockmair & Schwanhäusser Anwaltssozietät

(57) **Abstract**

The program-programming-data-setting unit (300) comprises: a key-detection unit (302), that detects key input from UP/DOWN (161a), LEFT/RIGHT (161b) cursor keys, and a setting key (161c) on a control unit (161,163); a remaining-recording-amount-detection unit (304) that detects the remaining recording amount on a HD (200) or DVD (202); and a program-programming-setting unit (303), that sets program-programming data based on the results of key detection by the key-detection unit (302) and the remaining recording amount of the HD (200) or DVD (202). The program-programming-setting unit (303) has OSD (146), for generating video data, including the set program-programming data for a program-programming table, or data necessary for performing settings, on an externally connected display monitor.

## Description

### BACKGROUND OF THE INVENTION

### 1. Field of the Invention

This invention relates to a programming apparatus that programs a program when programming the recording or reproduction of video data of a broadcast program or the like.

### 2. Description of the Related Art

With the spread of the video cassette recorder and the development of a DVD (Digital Versatile Disc) recorder or hard disc recorder, the recording of broadcast programs onto a recording medium such as a DVD, hard disc or video cassette has become commonplace.

More specifically, in the case of a broadcast program, the broadcast time is set beforehand, so technology for programmed recording using a program timer which makes recording possible without having to operate the recorder at the time of the broadcast has become widespread, and in most recorders such as a video-cassette recorder, DVD recorder and hard disc recorder (hereafter, referred to as the recorder) there is an apparatus for programmed recording (hereafter, referred to as a 'program-programming apparatus').

Of this kind of program-programming apparatus, an apparatus that displays the registered status of the programmed recording in a list format is well know. More specifically, this kind of program-programming apparatus assigns the time to the horizontal direction of the display screen on a monitor and the date to the vertical direction, and displays the programmed program at the place where the time and date cross (see for example, Japanese Laid-Open Patent Application No. H3-215782)

However, in a conventional program-programming apparatus, it is necessary to have date keys for setting the date or day of the week, and time keys for setting the time. Particularly, for setting the time, since there are 24 hours in one day, setting the time is performed using two or more kinds of keys for hour units and minute units.

For example, the conventional program-programming may comprise two kind of control keys: control keys for setting the time and that change the time in relatively long time increments, such as 15 minutes or 30 minutes, and keys that change the time in short time increments, such as 1 minute. The user uses this combination of control keys to set the programming starting time and the programming ending time, so it is not possible to easily set the programming time in a short amount of time.

Moreover, in this conventional program-programming apparatus, when programming a program for which the programming starting time and programming ending time are on different days, since the programmed programs are displayed by date, it is not possible to display the status of that programmed program systematically with the programmed programs of another date, or integrated with the programmed programs of another date.

Furthermore, when recording a broadcast program that has been programmed with this kind of conventional program-programming apparatus, the program-programming unit and recording unit that records that broadcast program onto the recording medium are constructed so that they are independent from each other, however they are not constructed such that a program is programmed in relation to the remaining amount on the recording medium.

### SUMMARY OF THE INVENTION

Taking the problems mentioned above into consideration, the object of this invention is to provide a data-recording/reproduction apparatus that makes it easy to check the programming status when programming a program and to input control, and that has excellent operability and is convenient for the user to use.

The above object of present invention can be achieved by a data-recording/reproduction apparatus of the present invention. The data-programming-control apparatus which controls the programming of at least one of recording and reproduction of contents data, which contains at least one of video data and audio data, distributed on preset date and time, the data-programming-control apparatus is provided with: an input device which is used for entering date data indicating the date when the contents data is distributed, and time data which indicates at least one of starting-time when distribution of the contents data starts and ending-time when distribution of the contents data ends, and which is used for setting at least one of the date data and the time data; a setting key which is located on the input device and which is used for setting the input date data; and a date/time-data-input key which is located on the input device, and which is used for entering the date data and the time data which indicates at least one of the starting-time and the ending-time after the date data is set.

The above object of present invention can be achieved by a data-recording/reproduction apparatus of the present invention. The data-programming-control apparatus which controls the programming of at least one of recording and reproduction of contents data, which contains at least one of video data and audio data, distributed on preset date and time, the data-programming-control apparatus is provided with: an input device which is used for entering date data indicating the date when the contents data is distributed, and time data which indicates at least one of starting-time when distribution of the contents data starts and ending-time when distribution of the contents data ends, and which is used for setting at least one of the date data and the time data; an image data-generating device which generates image data put in date order for notification of date/time data which correspond to the input date/time data during the date/time data are input; and a control device which controls at least one of the recording and reproduction of the distributed contents data based on the set date/time data; and wherein when the programming-ending time is input and the programming-ending time is on a different date form the set programming-starting time, the image data-generating device generates image data for displaying the programming-ending time, joined to a graphic one-day-data where the programming-starting time is.

The above object of present invention can be achieved by a data-recording/reproduction apparatus of the present invention. The data-programming-control apparatus which controls the programming of at least one of recording and reproduction of contents data, which contains at least one of video data and audio data, distributed on preset date and time, the data-programming-control apparatus is provided with: an input device which is used for entering date data indicating the date when the contents data is distributed, and time data including at least one of starting-time data which indicates time when distribution of the contents data starts and ending-time data which indicates time when distribution of the contents data ends, and which is used for setting at least one of the date data and the time data; an image data-generating device which generates image data for notification of date/time data corresponding to the input date/time data when the date/time data are input; a control device which controls the recording of the distributed contents data onto a recording medium based on the set date/time date; a detection device which detects remaining-recording-amount data that indicates the remaining recordable amount of the recording medium; and a restriction device which restricts the input of date/time data by the input device based on the detected remaining-recording-amount data.

The above object of present invention can be achieved by a data-recording/reproduction method of the present invention. The data-programming-control method for controlling the programming of at least one of recording and reproduction of contents data, which contains at least one of video data and audio data, distributed on preset date and time, the data-programming-control method is provided with: a first input process of setting date data indicating the date when the contents data is distributed in a case where the date data is input; and a second input process of setting time data which indicates at least one of starting-time when distribution of the contents data starts and ending-time when distribution of the contents data ends in a case where the time data is input after the date data is set.

The above object of present invention can be achieved by a data-recording/reproduction method of the present invention. The data-programming-control method for controlling the programming of at least one of recording and reproduction of contents data, which contains at least one of video data and audio data, distributed on preset date and time, the data-programming-control method is provided with: an input process of setting date data indicating the date when the contents data is distributed, and time data which indicates at least one of starting-time when distribution of the contents data starts and ending-time when distribution of the contents data ends, in a case where the date data and the time data are input; an image data-generatingprocess of generating image data put in date order for notification of date/time data which correspond to the input date/time data during the date/time data are input; and a control process of controlling at least one of the recording and reproduction of the distributed contents data based on the set date data and time date; and wherein the image data-generatingprocess generates image data for displaying the programming-ending time, joined to the graphic one-day-data where the programming-starting time is, in a case where the programming-ending time is on a different date form the set programming-starting time.

The above object of present invention can be achieved by a data-recording/reproduction method of the present invention. The data-programming-control method for controlling the programming of at least one of recording and reproduction of contents data, which contains at least one of video data and audio data, distributed on preset date and time, the data-programming-control method is provided with: an input process of setting date data indicating the date when the contents data is distributed, and time data which indicates at least one of starting-time when distribution of the contents data starts and ending-time when distribution of the contents data ends, in a case where the date/time data are input; an image data-generating process of generating image data put in date orderfor notification of date/time data which correspond to the input date/time data during the date/time data are input; a control process of controlling at least one of the recording and reproduction of the distributed contents data based on the set date data and time date; and a detection process of detecting remaining-recording-amount data which indicates the remaining recordable amount of the recording medium, wherein the input process restricts the input of date/time data based on the detected remaining-recording-amount data during the date/time data are input.

The above object of present invention can be achieved by a recorded medium of the present invention wherein a data programming control program is recorded so as to be read by a computer, the computer included in a data-programming-control apparatus for controlling the programming of at least one of recording and reproduction of contents data, which contains at least one of video data and audio data, distributed on preset date and time. The data programming control program causes the computer to function as: a first input setting device which sets date data indicating the date when the contents data is distributed in a case where the date data is input; and a second input setting device which sets time data which indicates at least one of starting-time when distribution of the contents data starts and ending-time when distribution of the contents data ends in a case where the time data is input after the date data is set.

The above object of present invention can be achieved by a recorded medium of the present invention wherein a data programming control program is recorded so as to be read by a computer, the computer included in a data-programming-control apparatus for controlling the programming of at least one of recording and reproduction of contents data, which contains at least one of video data and audio data, distributed on preset date and time. The data programming control program causes the computer to function as: an input setting device which sets date data indicating the date when the contents data is distributed, and time data which indicates at least one of starting-time when distribution of the contents data starts and ending-time when distribution of the contents data ends, in a case where the date data and the time data are input; an image data-generating device which generates image data put in date order for notification of date/time data which correspond to the input date/time data during the date/time data are input; and a control device which controls at least one of the recording and reproduction of the distributed contents data based on the set date/time date; and wherein the image data-generating device generates image data for displaying the programming-ending time, joined to the graphic one-day-data where the programming-starting time is, in a case where the programming-ending time is on a different date form the set programming-starting time.

The above object of present invention can be achieved by a recorded medium of the present invention wherein a data programming control program is recorded so as to be read by a computer, the computer included in a data-programming-control apparatus for controlling the programming of at least one of recording and reproduction of contents data, which contains at least one of video data and audio data, distributed on preset date and time. The data programming control program causes the computer to function as: an input setting device which sets date data indicating the date when the contents data is distributed, and time data which indicates at least one of starting-time when distribution of the contents data starts and ending-time when distribution of the contents data ends, in a case where the date/time data are input; an image data-generating device which generates image data put in date order for notification of date/time data which correspond to the input date/time data during the date/time data are input; a control device controls at least one of the recording and reproduction of the distributed contents data based on the set date data and time date; and a detection device detects remaining-recording-amount data which indicates the remaining recordable amount of the recording medium, wherein the input setting device restricts the input of date/time data based on the detected remaining-recording-amount data during the date/time data are input.

### BRIEF DESCRIPTION OF THE DRAWINGS

Fig. 1 is a block diagram showing the main construction of a embodiment of the data-recording/reproduction apparatus of this invention.
Fig. 2 is a drawing showing an example of part of the construction of the keys on a remote-control device of the embodiment of the invention.
Fig. 3 is a block diagram showing the construction of program-programming-data-setting unit of the data-reproduction apparatus of the embodiment of the invention.
Fig. 4 is an example of the video data of the program-programming-data table that is created by the OSD of the embodiment.
Fig. 5 is a drawing (I) for explaining the generation process of generating video data for the program-programming-data table by the program-programming-setting unit of the embodiment.
Fig. 6 is a drawing (II) for explaining the generation process of generating video data for the program-programming-data table by the program-programming-setting unit of the embodiment.
Fig. 7 is a drawing (III) for explaining the generation process of generating video data for the program-programming-data table by the program-programming-setting unit of the embodiment.
Fig. 8 is a drawing (IV) for explaining the generation process of generating video data for the program-programming-data table by the program-programming-setting unit of the embodiment.
Fig. 9 is a drawing (V) for explaining the generation process of generating video data for the program-programming-data table by the program-programming-setting unit of the embodiment.
Fig. 10 is a drawing (VI) for explaining the generation process of generating video data for the program-programming-data table by the program-programming-setting unit of the embodiment.
Fig. 11 is a flowchart showing the operation of the program-programming setting process of the embodiment.
Fig. 12 is a flowchart showing the operation of a first program-end-time-setting process of the embodiment.
Fig. 13 is a flowchart showing the operation of a second program-end-time-setting process of the embodiment.

Each meaning of the reference numbers in the drawings are as follows: 100: the data-recording/reproduction apparatus, 120: Data recording system, 140: Data-reproduction system, 146: OSD, 160: System-control system, 164: Display unit, 166: System-control unit, 300: Program-data-setting unit, 301: Time-measurement unit, 302: Key-detection unit, 303: Programming-setting unit, and 304 : Remaining-recording-amount-detection unit.

### DETAILED DESCRIPTION OF THE PREFERRED EMBODIMENTS

The preferred embodiments of the present invention will be explained below with reference to the drawings.

In the embodiments explained below, the program-programming apparatus and data-recording/reproduction apparatus of this invention are applied to a data-recording/reproduction apparatus that records a broadcast program onto a hard disc (hereafter, referred to as HD) and DVD.

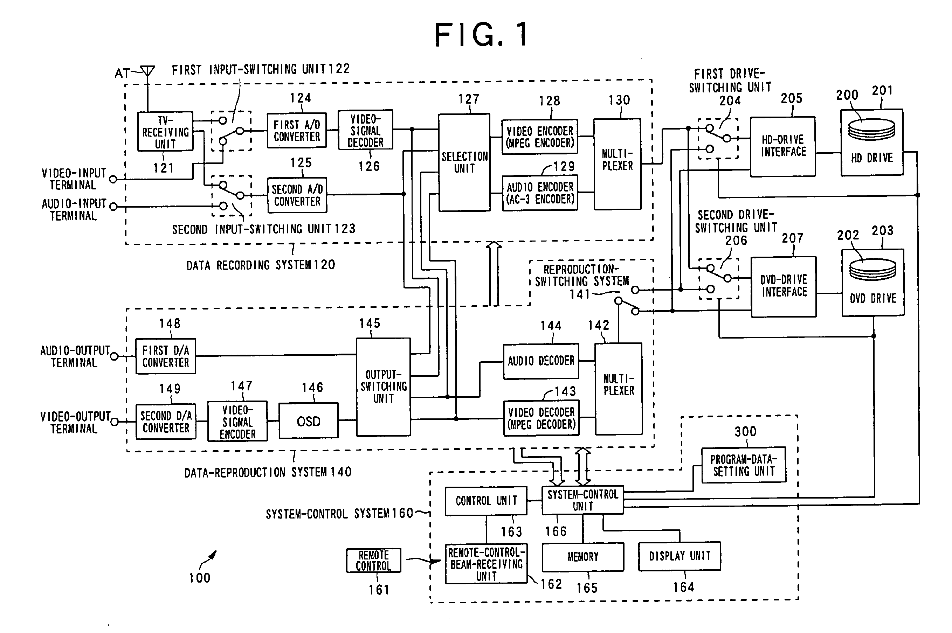

First, Fig. 1 is used to explain the overall construction and main operation of the data-recording/reproduction apparatus.

Fig. 1 is a block diagram showing the main construction of the data-recording/reproduction apparatus of the invention.

As shown in Fig. 1, the data-recording/reproduction apparatus 100 of this embodiment comprises: a HD drive 201 that writes data to or reads data from an HD 200, which is a recording medium on which video data and audio data are recorded; a DVD drive 203 that writes data to or reads data from a DVD 202, which is a recording medium on which video data and audio data are recorded; a data-recording system 120 that receives video data and audio data, such as the video signal and audio signal of a broadcast program, and records that video data and audio data onto the HD 200 or DVD 202; a data-reproduction system 140 that reads video data and audio data that are already recorded on the HD 200 or DVD 202, and reproduces the respective data; and a system-control system 160 that controls the data-recording system 120 and the data-reproduction system 140.

The HD drive 201 is connected to a first drive-switching unit 204 that switches between the output from the DVD drive 203 and the output from the data-recording system 120, and an HD drive interface 205 that complies to a standard such as ATAPI (AT Attachment Packet Interface). This first drive-switching unit 204 switches the input and output according to control from the system-control unit 166 described later.

Also, this HD drive 201 reads program streams from an HD 200 that consists of video data and audio data that were recorded on the HD 200 beforehand, and outputs them to the data-reproduction system 140 by way of the HD drive interface 205. This HD drive 201 receives program streams that were generated by the data-recording system 120 by way of the HD drive interface 205, and records the received program streams onto the HD 200.

The DVD drive 203 is connected to a second drive-switching unit 206 that switches between the output from the HD drive 201 and the output from the data-recording system 120, and a DVD drive interface 207 that complies to a standard such as ATAPI (AT Attachment Packet Interface). Similar to the first drive-switching unit 204, this second drive-switching unit 206 switches the input and output according to control from the system-control unit 166 described later.

Moreover, similar to the HD drive 201, this DVD drive 203 reads program streams from the DVD 202 that contains video data and audio data that were recorded beforehand, and outputs the streams to the data-reproduction system 140 by way of the DVD drive interface 207. This DVD drive 203 also receives program streams that were generated by the data-recording system 120 by way of the DVD drive interface 207, and records the received program streams onto the DVD 202.

Next, the detailed construction and operation of the data-recording system of the data-recording/reproduction apparatus of this embodiment will be explained.

The data-recording system 120 of the data-recording/reproduction apparatus 100 of this embodiment comprises: a TV receiving unit 121 that, by way of an antenna AT, receives broadcast signals that are sent from broadcast stations; a first input-switching unit 122 and a second input-switching unit 123 that switch between analog video signals and audio signals that are input from the outside by way of a video-input terminal and an audio-input terminal, and the output from the TV receiving unit 121; a first analog-to-digital (hereafter referred to as A/D) converter 124 that converts the received or input TV video signal to a digital signal; a second A/D converter 125 that converts a received or input audio signal to a digital signal; a video-signal decoder 126 that decodes the TV video signal, which is converted to a digital signal, to a video signal; a selection unit 127 that selects the video signal and audio signal to encode; a video encoder 128 that converts the video signal that is selectedbythe selection unit 127 to MPEG (Motion Picture Expert Group) format; an audio encoder 129 that converts the audio signal that is selected by the selection unit 127 to AC (Audio Coding) -3 format; and a multiplexer 130 that generates a program stream from the MPEG format video data and AC-3 format audio data.

The TV receiving unit 121 receives a broadcast signal, for example an RF signal such as a VHF or BS signal that is sent from a broadcast station, by way of an antenna AT. Also, the TV receiving unit converts the received signal that is tuned to a receiving range that is selected by the user to an IF (intermediate frequency) signal, demodulates the signal to a TV video signal and audio signal, and outputs them to the first input-switching unit 122 and the second input-switching unit 123.

The first input-switching unit 122 receives the TV video signals that are output from the TV receiving unit 121 and analog video signals that are input from the outside by way of the video-input terminal. This first input-switching unit 122 selectively switches between these input TV video signals based on control from the system-control system 160, and outputs the video signal to the first A/D converter 124.

Also, the second input-switching unit 123 receives the audio signals that are output from the TV receiving unit 121 and analog audio signals that are input from the outside by way of the audio-input terminal. This second input-switching unit 123 selectively switches between these input audio signals based on control from the system-control system 160, and outputs the audio signal to the second A/D converter 125.

The first A/D converter 124 receives the TV video signal which is the analog signal that is selected by the first input-switching unit 122, converts the input TV video signal to a digital signal, and outputs it to the video-signal decoder 126.

The video-signal decoder 126 receives the TV signal that is converted to a digital signal, converts it to a normal video signal, for example, a NTSC format video signal, by decoding the input TV video signal. Also, this video-signal converter 126 outputs the converted video signal to the selection unit 127.

The second A/D converter 125 receives the audio signal, which is the analog signal that is selected by the input-switching unit, converts the audio signal, which is the input analog signal, to a digital signal, and outputs it to the selection unit 127.

The selection unit 127 receives the video signal and the audio signal that were output from the video-signal decoder 126 and the second A/D converter 125, and the decoded video signal and the decoded audio signal that are output from the HD drive 201 or DVD drive 203 when performing dubbing, as will be described later. This selection unit 127 selects one of the input video signal and audio signal based on control from the system-control system 160, and outputs the selected video signal to the video encoder 128 and outputs the selected audio signal to the audio encoder 129.

The video encoder 128 receives the video signal that is selected by the selection unit 127, converts the input video signal to MPEG format video data, and outputs that converted video data to the multiplexer 130.

This audio encoder 129 receives the audio signal that was selected by the selection unit 127, converts the input video signal to AC-3 format audio data, and outputs that converted audio data to the multiplexer 130.

This multiplexer 130 receives the video data converted to MPEG format and the audio data converted to AC-3 format generates a program stream based on the input video data and audio data, and outputs that generated program stream to the first drive- switching unit 204 and second drive- switching unit 206.

Next, the detailed construction and operation of the data-reproduction system of the data-recording/reproduction apparatus of this embodiment will be explained.

The data-reproduction system 140 of the data-recording/reproduction apparatus 100 of this embodiment comprises: a reproduction-switching unit 141 that selects either the reproduction output from the HD 200 or the reproduction output from the DVD 202; a de-multiplexer 142 that extracts the audio data and video data, which are output from the HD drive 201 or DVD drive 203, from the program stream; a video decoder 143 and audio decoder 144 that decode the video signal and audio signal that are separated by this de-multiplexer 142; an output-switching unit 145 that switches between the video signal and audio signal that are output from the video decoder 143 and audio decoder 144, and the video signal and audio signal that are output from the TV receiving unit 121; a OSD (On Screen Display) 146 that generates thumbnails (so-called representative images) that are to be superimposed over the image that is displayed on the monitor to be described later; a video-signal encoder 147 that converts the signal to a TV signal; a first digital-to-analog (hereafter referred to as D/A) that converts the video signal, which is a digital signal, to an analog signal; and a second D/A converter 149 that converts the audio signal, which is a digital signal, to an analog signal. The video signal and audio signal that are converted to analog signals are output to the outside by way of a video-output terminal and audio-output terminal.

The reproduction-switching unit 141 receives the program stream that is output from the HD drive 201 by way of the HD-drive interface 205 and the program stream that is output from the DVD drive 203 by way of the DVD-drive interface 207, selects one of the program streams that is output from one of the drives based on control from the system-control unit 166, and outputs the selected program stream to the de-multiplexer 142.

The de-multiplexer 142 receives the program stream that is selected by the reproduction-switching unit 141, separates the video data and the audio data from the input program stream, and then outputs the separated video data and the separated audio data to the video decoder 143 and audio decoder 144, respectively.

Particularly, this de-multiplexer 142 separates video data from the program stream that has MPEG format, and audio data that has AC-3 format.

The video decoder 143 receives the video data having MPEG format that is separated from the program stream, converts it to a video signal by decoding the input MPEG formatted video data, and outputs that video signal, which is a decoded digital signal, to the output-switching unit 145.

The audio decoder 144 receives the audio data having AC-3 format that is separated from the program stream, converts it to an audio signal by decoding the input AC-3 formatted audio data, and outputs the audio signal, which is a decoded digital signal, to the output-switching unit 145.

The output-switching unit 145 receives the video signal and audio signal, which are digital signals output from the data-recording system 120, and the video signal and audio signal that are decoded by the video decoder 143 and audio decoder 144 . This output-switching unit 145 switches between the video signal and the audio signal that are output from the data-recording system 120 and the decoded video and audio signal based on control from the system-control unit 166, and outputs the video signal to the OSD 146 and outputs the audio signal to the second D/A converter 149.

In this embodiment, the output-switching unit 145 receives the video signal that is output from the video-signal decoder 126 and the audio signal that is output from the second A/D converter 125.

The OSD 146 receives the video signal that is switched by the output-switching unit 145, superimposes the necessary text data over the input video signal, and outputs this video signal with superimposed text data to the video-signal encoder 147.

In this embodiment, when programming a program as will be described later, the OSD 146 generates video data for the program-programming table based on an instruction from the system-control system 160, or more specifically, based on control from the program-programming-data-setting unit 300, and superimposes the generated video data onto the input video signal or switches from the input video signal and outputs it to the video-signal encoder 147.

The video data in the program-programming table generated as mentioned above by the OSD 146 of this embodiment will be described in detail later. Also, the OSD of this embodiment serves as an image-generation device of the present invention.

The video-signal encoder 147 receives the video signal, onto which the text data is superimposed. In order to display this input video signal to an external monitor or the like, this video-signal encoder 147 converts the signal to TV video format and then outputs the video signal converted to TV format to the second D/A converter 149.

The second D/A converter 149 receives the video signal, which is a digital signal that is converted to TV format, converts the video signal, which is this input digital signal, to an analog signal, and outputs the video signal that is converted to an analog signal to the outside by way of the video-output terminal.

The first D/A converter 148 receives the audio signal, which is the digital signal switched to by the output-switching unit 145, converts the audio signal, which is the input digital signal, to an analog signal, and outputs the audio signal that is converted to an analog signal to the outside by way of the audio-output terminal.

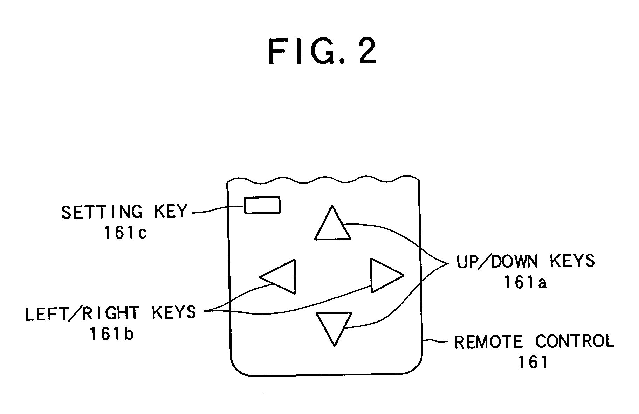

Next, Fig. 2 will be used to explain the detailed construction and operation of the system-control system of the data-recording/reproduction apparatus of this embodiment.

Fig. 2 is a drawing showing an example the construction of part of the keys of the remote-control device of this embodiment.

The system-control system 160 of the data-recording/reproduction 100 of this embodiment comprises: a remote-control-beam-receiving unit 162 that receives a light beam that is emitted from the remote-control device 161 that performs remote control of the data-recording/reproduction apparatus 100; a control unit 163 by which the user performs control settings; a display unit 164 that displays data desired by the user such as data for confirming controls by the remote-control device 161 or control unit 163; a program-programming-data-setting unit 300 that sets data required for programming a program (hereafter, referred to as 'program-programming data') based on data from key input (hereafter, referred to as 'key-input data') to the remote-control device 161 or the control unit 163 when programming a program, and controls the OSD 146 and generates video data for the program-programming data in order to display it on a monitor (not shown in the figures) ; a memory 165 that stores programs necessary for various operations; and the system-control unit 166 that controls the entire system.

As shown in Fig. 2, this remote-control device comprises a plurality of keys such as various confirmation buttons and numeric keys, and UP/DOWN and LEFT/RIGHT cursor keys located in the center of the remote-control device 161, for example. More specifically, the UP/DOWN and LEFT/RIGHT cursor keys (hereafter, referred to as simply 'UP/DOWN keys' and 'LEFT/RIGHT keys') are used when setting the programming starting time and programming ending time when programming a program, as will be described later.

In this remote-control device 161, the UP/DOWN keys 161a are used for entering the time, and one key is used for entering the time in order in the forward direction, and the other key is for entering the time in order in the backward direction. Also, similar to the UP/DOWN keys 161a, the LEFT/RIGHT keys 161b are used for entering the time, and one key is used for entering the time in order in the forward direction, and the other key is used for entering the time in order in the backward direction.

Furthermore, after an UP/DOWN key 161a is pressed once, the UP/DOWN key 161a changes the day of the programmed recording, and after the programming-start time is set, it changes the programming starting time or programming ending time in one-minute increments in the forward direction or backward direction.

On the other hand, when a LEFT/RIGHT key 161b is pressed once, it changes the programming starting time or programming ending time in 15-minute increments in the forward or backward direction.

When the confirmation button (hereafter called the 'Setting key') 161c is pressed while setting the programming starting time, the programming starting time is set, and when the setting key 161c is pressed while setting the programming ending time, the programming ending time is set.

Also, for example, the remote-control device 161 of this embodiment serves as an input device of the present invention, and the UP/DOWN keys 161a serves as a date/time-data-input device of the present invention. Furthermore, the LEFT/RIGHT keys 161b of the remote-control device 161 of this embodiment serves as a date/time-data-input device of the present invention, and the setting key 161c serves as the setting key of the present invention.

The remote-control-beam-receiving unit 162 receives a light beam that is emitted from the remote-control device 161, such as an infrared beam of light. This remote-control-beam-receiving unit 162 converts the received light beam to a specified signal and outputs it to the control unit 163.

Similar to the remote-control device 161, the control unit 163 comprises a plurality of various buttons and numeric keys, as well as UP/DOWN keys and LEFT/RIGHT keys, and specifically, the UP/DOWN keys and LEFT/RIGHT keys are used when setting the programming start time and programming end time when programming a program as will be described later.

Also, this control unit 163 outputs the specified signal based on the key controls, or the specified signal that is from the remote-control-beam-receiving unit 162 to the system-control unit 166.

The UP/DOWN keys and LEFT/RIGHT keys of this control unit 163 have the same construction as the UP/DOWN keys 161a and the LEFT/RIGHT keys 161b of the remote-control device 161 shown in Fig. 2.

Also, for example, the control unit 163 of this embodiment serves as an input device of the present invention and the UP/DOWN keys and LEFT/RIGHT keys serves as a date/time-data-input device of the present invention. The setting key serves as the setting device of the present invention.

The display unit 164 has a light-emitting unit comprising a plurality of light-emitting elements such as liquid crystals, and it displays data desiredby the user such as data for checking the control by the remote-control device 161 or control unit 163.

The program-programming-data-setting unit 300 sets data necessary for programming a program based on key-input data that is entered from the remote-control device 161 or control unit 163, when setting to automatically record a broadcast program onto the HD 200 or DVD at a preset time (hereafter, called program programming). Also, when setting the program-programming data, this program-programming-data-setting unit 300 has the OSD 146 generate video data for the generated program-programming table and superimpose the video data onto the generated program-programming table and output it to the outside by way of the video-signal encoder 147 and D/A converter.

The detailed construction and operation of the program-programming-data-setting unit 300 of this embodiment, and the details of the video data in the program-programming table generated by the OSD 146 will be described later. Moreover, the program-programming-data-setting unit 300 serves as a control device, image-generating device, detection device, restriction device, first input setting device, second input setting device and restriction device of the present invention.

The system-control unit 166 mainly comprises a central processing unit (CPU) , various input/output ports such as a key-input port and display-unit 164 output port, and it performs overall control of the functions for the reproduction and recording processes for the HD 200 and reproduction and recording processes for the DVD 202.

Particularly, the system-control unit 166 of this embodiment performs control such that the program-programming-data-setting unit 300 sets program-programming data based on control-key input to the remote-control device 161 or the control unit 163. Also, when setting the program-programming data, this system-control unit 166 makes the OSD 146 generate the video data for the program-programming table and output to the outside by way of the video-signal encoder 147 and the first D/A converter 148.

This system-control unit 166 sends instructions to each unit of the program-programming-data-setting unit 300 and OSD 146 when it detects that the program programming operation starts. Also, when this system-control unit 166 detects that the program programming operation starts , according to control from the remote-control device 161 or control unit 163, it detects the remaining amount of recording space on the HD 200 or DVD 202, or the storage status of the DVD 202, which are the recording media for the recording that is being programmed.

When programming a program, or when recording a programmed broadcast program onto the HD 200 or DVD 202, the system-control unit 166 executes processes for reading the control programs stored in the memory 165, and temporarily stores data during processing in the memory 165.

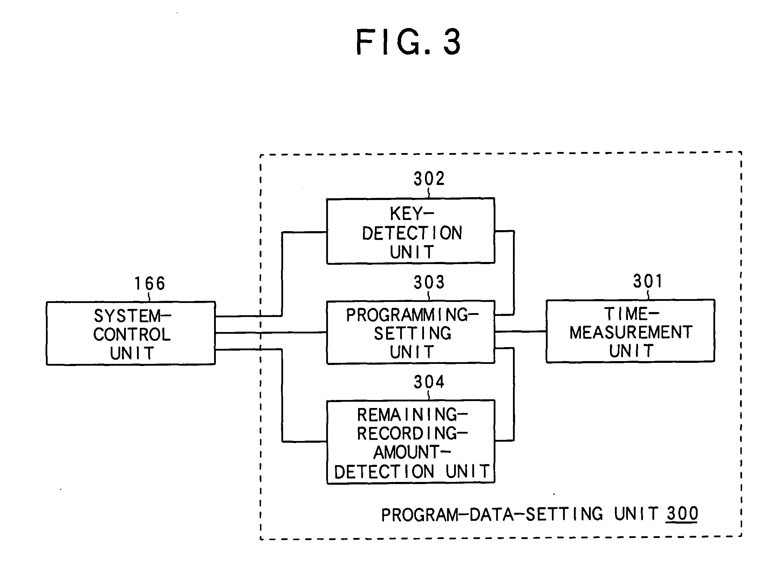

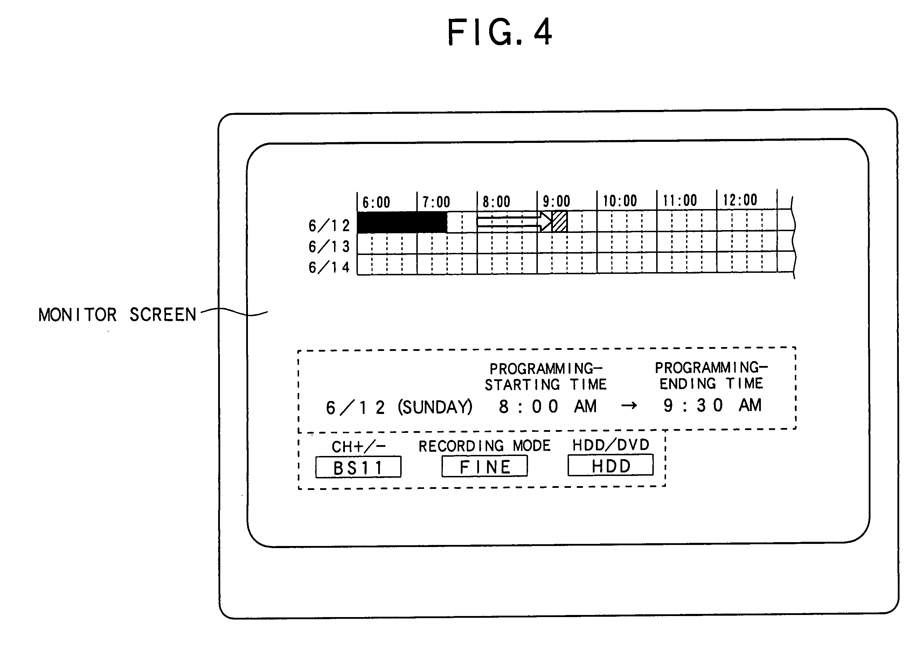

Next, Fig. 3 and Fig. 4 will be used to explain the construction and operation of the program-programming-data-setting unit of the data-recording/reproduction apparatus of this embodiment.

Fig. 3 is a block diagram showing the construction of the program-programming-data-setting unit of the data-recording/reproduction apparatus of this embodiment, and Fig. 4 is an example of the video data of the program-programming table that is generated by the OSD 146.

As described above, the program-programming-data- setting unit 300 of this embodiment, sets program-programming data necessary for programming a program based on key-input data that is entered into the remote-control device 161 or the control unit 163. Also, the program-programming-data-setting unit 300 of this embodiment has the OSD 146 generate the set program-programming data or the data necessary when setting that data, and display that data on an externally connected monitor.

More specifically, as shown in Fig. 3, this program-programming-data-setting unit 300 comprises: a time-measurement unit 301 that calculates the current time; a key-detection unit 302 that detects key-input data of the UP/DOWN and LEFT/RIGHT cursor keys and setting key on the remote-control device 161 or control unit 163; a program-programming-setting unit 303 that sets program-programming data based on the key detection results by the key-detection unit 302, the current time calculated by the time-measurement unit 301, and the amount of remaining recording amount on the HD 200 or DVD 202, as well as has the OSD 146 generate video data containing the set program-programming data for the program-programming table; and a remaining-recording-amount-detection unit 304 that detects the remaining recording amount on the HD 200 or DVD 202.

The program-programming-setting unit 303 of this embodiment serves as a control device, a video data-generating device and a restriction device of the present invention, and the remaining-recording-amount-detection unit 304 serves as a detection device of the present invention.

The time-measurement unit 301 comprises a clock that indicates the current date and time, and it outputs date/time data that indicate the current date and time to the program-programming-setting unit 303 when programming a program.

More specifically, the time-measurement unit 301 outputs the date/time data to the program-programming-setting unit 303 when the operation for programming a program starts in a case where an instruction for starting the operation for programming a program is input using the remote-control device 161 or control unit 163.

The key-detection unit 302, by way of the system-control unit 166, detects key-input data of the UP/DOWN and LEFT/RIGHT cursor keys and setting key on the remote-control device 161 and control unit 163, and key-input data of the selection key for specifying the recording media on which the programmed broadcast program is recorded. This key-detection unit 302 outputs the detected key-input data of the cursor keys, setting key and selection key to the program-programming-setting unit 303 as key-input data.

The remaining-recording-amount-detection unit 304, by way of the system-control unit 166, detects the remaining time for the remaining recording amount for either the HD 200 or DVD 202 or both according to an instruction from the program-programming-setting unit 303 when the operation for programming a program is started. This remaining-recording-amount-detection unit 304 outputs the remaining-time data that indicates the remaining time for the remaining recording amount for the HD 200 or DVD 202 to the program-programming-setting unit 303.

The program-programming-setting unit 303 receives Date/time data, key-input data, and remaining-time data, sets program-programming data based on the input data when this program-programming-setting unit 303 starts the programming operation for programming a program, and has the OSD 146 generate video data for setting that program-programming data.

More specifically, as shown in Fig. 4, when a program is programmed, this program-programming-setting unit 303 has the OSD 146 generate the program-programming table that shows the date that the programming is performed and the dates for a specified period after the programming is performed on the vertical axis, and the time for 24 hours for one day along the horizontal axis.

Also, based on the key-input data that is entered into the generated program-programming table and also other data, this program-programming-setting unit 303 has the OSD 146 generate video data on which program-programming data, such as the time period that includes the starting time and ending time for the set broadcast program to be recorded, the type of recording medium, and the channel of the broadcasting station, for programming a specifiedprogram, is superimposed.

When programming a program, or in other words, when setting program-programming data, this program-programming-setting unit 303 has the OSD 146 generate video data in real-time on which key data such as the programming starting time, programming ending time and cursor key data (hereafter referred to as 'cursor-key data') for setting these are superimposed on the program-programming table.

For example, as shown in Fig. 4, in order to have various data displayed on the display screen of an externally connected monitor, the program-programming-setting unit 303 has the OSD 146 generate video data for that display.

More specifically, in a case where programming is executed on June 12, the program-programming-setting unit 303 has the OSD 146 generate video data that shows the dates from June 12 to June 14 in the vertical axis, and the elapsed time is displayed in a different color than the present time and time in the future.

Also, this program-programming-setting unit 303 has an arrow displayed from the programmed starting time to the programmed ending time, and during setting, has the time over which the cursor is located flash.

Furthermore, this program-programming-setting unit 303 has the channel that provides the broadcast program, the recording mode for performing setting during recording and the selected recording medium displayed.

When setting the program-programming data, the process in which the program-programming-setting unit 303 has the OSD 146 generate video data for the program-programming data that contains key-input data will be explained later.

Also, in this embodiment, when the program-programming-setting unit 303 has the OSD 146 generate the program-programming table, video data on which key-input data is superimposed onto the program-programming data is output to the outside from the video-output terminal.

In this way, the data-recording/reproduction apparatus 100 is able to display various key-input data on an externally connected monitor or the like, so it is possible to enable the user to accurately and easily set program-programming data.

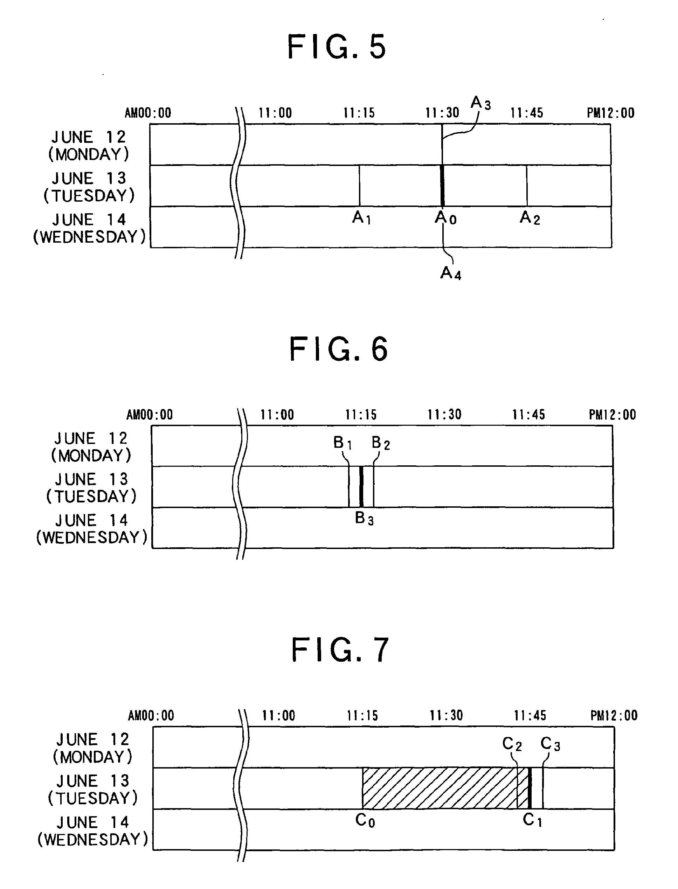

Next, Fig. 5 to Fig. 10 will be used to explain the generation process for video data that is executed when the program-programming-setting unit has the OSD generate video data in which key-input data is superimposed on the program-programming table.

Figs. 5 to 10 are drawings for explaining the generation process of the program-programming-setting unit 303 for generating video data of the program-programming-data table.

In this embodiment, when setting the program-programming data, the program-programming-setting unit 303 has the OSD 146 generate video data for the program-programming table on which key-input data interlocked with the control keys on the remote-control device 161 or the control unit 163 is superimposed. Also, the program-programming-setting unit 303 displays that program-programming data on the display apparatus of an externally connected monitor or the like.

More specifically, in this embodiment, when the key-detection unit 302 detects the UP/DOWN keys 161a, LEFT/RIGHT keys 161b, setting key 161c or selection key on the control unit 163 or remote-control device 161, the program-programming-setting unit 303 sets the programming starting time, programming ending time, recording rate (transfer rate) that indicates the recording quality of the video, the recording medium on which the broadcast program is recorded, and the channel of the broadcast station, based on the key-input data. The program-programming-setting unit 303 has the OSD 146 generate video data for the program-programming table on which the key-input data and program-programming data are superimposed.

Particularly, during the process of setting program-programming data, when generating video data for the program-programming table, which shows the date that programming is performed and the dates for two days after programming is performed on the vertical axis, the program-programming-setting unit 303 has the OSD 146 generate video data in real-time for the cursor data that indicates the programming starting time and programming ending time based on the key-input data from the UP/DOWN keys 161a, LEFT/RIGHT keys 161b and setting key 161c.

More specifically, when setting the programming starting time, the program-programming-setting unit 303 changes the date after detecting the key-input data from the UP/DOWN keys 161a. Also, when setting the programming ending time, the program-programming-setting unit 303 changes the time for the date on which the cursor is located in 15-minute steps.

When changing the date or time, the program-programming-setting unit 303 has the OSD 146 generate video data that contains that cursor data.

On the other hand, after the programming starting time has been set, or in other words, after the setting key 161c has been pressed to set the programming starting time, the program-programming-setting unit 303 detects the key-input data of the UP/DOWN keys 161a and performs fine adjustment of the programming starting time in 1-minute steps, or changes the programming ending time. Also, the program-programming-setting unit 303 has the OSD 146 generate video data that contains that cursor data.

For example, as shown in Fig. 5, when the cursor is located at A0 and the LEFT/RIGHT keys 161b are pressed once, the program-programming-setting unit 303 changes the time indicated by the cursor in a 15-minute interval to A1 or A2. Also, when the UP/DOWN keys 161a are pressed once, the program-programming-setting unit 303 changes the date indicated by the cursor to A3 or A4.

When changing the date or time, the program-programming-setting unit 303 has the OSD 146 generate video data that contains that cursor data.

Similarly, when the program-programming-setting unit 303 sets the programming ending time after the programming starting time has been set, or in other words, the key-input data from the LEFT/RIGHT keys 161b is detected with the already set programming starting time as a reference, the program-programming-setting unit 303 changes the time indicated by the cursor in 15-minute steps. Also, when key-input data for the UP/DOWN keys 161a is detected, the program-programming-setting unit 303 changes the programming time indicated by the cursor in 1-minute steps.

The program-programming-setting unit 303 then similarly has the OSD 146 generate video data that contains that cursor data.

Moreover, if an UP/DOWN key 161a is pressed once when the program-programming-setting unit 303 sets the programming ending time after the programming starting time has been set, the program-programming-setting unit 303 changes the programming starting time or the programming ending time in 1-minute steps. When the UP/DOWN key 161a is pressed, this program-programming-setting unit 303 determines whether or not the cursor location is the programming starting time. By determining the cursor location, the program-programming-setting unit 303 changes the programming starting time or programming ending time in 1-minute steps in order to perform fine adj ustment of the programming starting time or programming ending time.

For example, as shown in Fig. 6, if the UP/DOWN key 161a is pressed once when the programming starting time is set at B0 and the program-programming-setting unit 303 determines that the cursor is located at programming starting time B0, the program-programming-setting unit 303 finely adjusts the programming starting time in a 1-minute step and moves the cursor to B1 or B2.

Also, if the LEFT/RIGHT key 161b is pressed twice in the forward direction when the programming starting time is set at C0 and the program-programming-setting unit 303 determines that the cursor is located at programming starting time C0, as shown in Fig. 7, the program-programming-setting unit 303 changes the programming ending time and moves the cursor to C1. If the UP/DOWN key 161a is pressed once when the cursor is located at C1, the program-programming-setting unit 303 finely adjusts the programming ending time in 1-minutes steps and moves the cursor to C2 or C3.

In this embodiment, when the program-programming-setting unit 303 sets the programming starting time, the cursor that is located at the last time on a date is changed by key-input data from the LEFT/RIGHT key 161b to the first time D1 on the next date. In other words, when the program-programming-setting unit 303 crosses over to the next date in changing the cursor position, it is possible to change the cursor position by the key-input data of the LEFT/RIGHT key 161b.

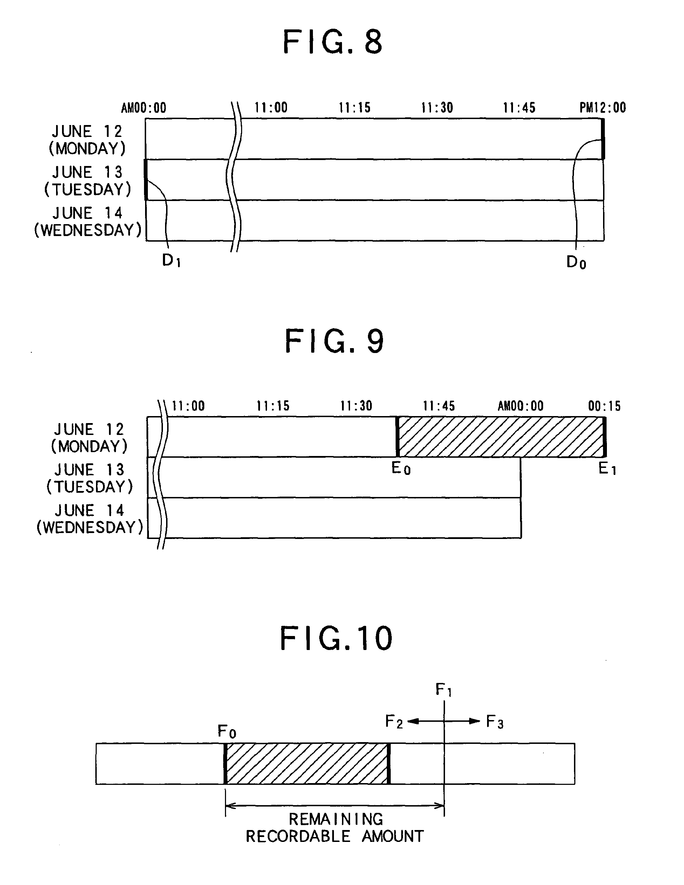

For example, as shown in Fig. 8, if the LEFT/RIGHT key 161b on the control unit 163 or remote-control device 161 is pressed in the forward direction when the cursor is located at the last time D0 of a date, the program-programming-setting unit 303 changes the position of the cursor to the first time D1 of the next day after the day of that last time D0. The program-programming-setting unit 303 has the OSD 146 generate video data that contains that cursor data.

Furthermore, in this embodiment, when the date of the programming ending time differs from the date of the programming starting time, or in other words, when programming is set such that it crosses over to the next day, the program-programming-setting unit 303 has the OSD 146 generate video data that displays the programming ending time on the same day as the programming starting time.

For example, as shown in Fig. 9, when the programming starting time is set at E0 and the programming ending time is on the next day, the program-programming-setting unit 303 has the OSD 146 generate video data that shows that programming ending time on the same day as the programming starting date even when that programming ending time is E1.

Furthermore, in this embodiment, as described above, during setting of the program-programming data, the program-programming-setting unit 303 controls the position of the cursor based on the remaining recording amount of the HD 200 or DVD 202 that is detected by the remaining-recording-amount-detection unit 304. Also, this program-programming-setting unit 304 links control of this cursor position with the video data that is generated by the OSD 146.

For example, if the key-input data is input using LEFT/RIGHT keys 161b or UP/DOWN keys 161 in order to set the programming ending time in the program-programming-setting unit 303 when the remaining-recording amount of the HD 200 or DVD 202 is only up to F1 with respect to the programming starting time F0, then as shown in Fig. 10, the program-programming setting unit 303 has the OSD 146 generate video data that does not allow the cursor tomove in the direction from F1 to F3 with F1 as a reference.

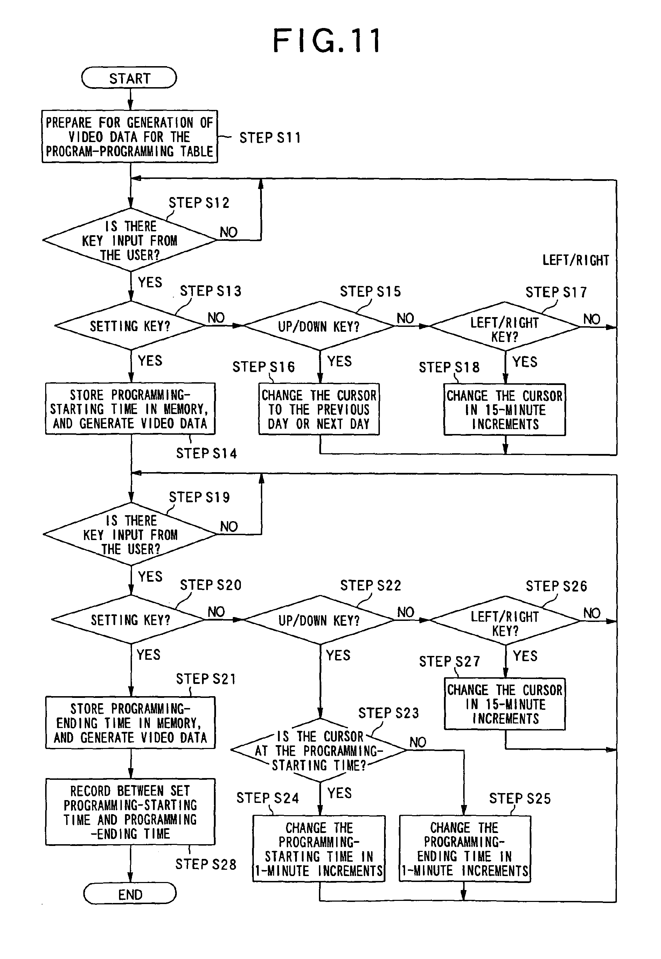

Next, Fig. 11 will be used to explain the operation of the program-programming process of this embodiment.

Fig. 11 is a flowchart that shows the operation of the program-programming process of this embodiment.

Also, the type of recordingmedium on which the programmed broadcast program is recorded and the channel that provides the broadcast program are set in advance, and data indicating the type of recording medium, setting data for the quality of the recorded image, and channel data are stored in the program-programming-setting unit 303 by way of the key-detection unit 302.

First, if the key-detection unit 302 detects that there is control key input from the remote-control device 161 or control unit 163 to set the programming of a program, and notifies the program-programming-setting unit 303 of that, the program-programming-setting unit 303 starts preparation for setting the program-programming data, and starts preparation for having the OSD 146 generate video data for the program-programming table on which key-input data that is linked to the key controls is superimposed (step S11).

More specifically, the remaining-recording-amount-detection unit 304 detects the remaining-recording amount for the recording medium on which the preset broadcast program is to be recorded, and outputs that result to the program-programming-setting unit 303. Also, the time-measurement unit 301 calculates the current time and outputs time data that indicates the current time to the program-programming-setting unit 303. Moreover, the program-programming-setting unit 303 generates a program-programming table as described above based on this input time data and recording medium data, and has the OSD 146 generated video data for that program-programming table.

Next, the key-detection unit 302 determines at specified time intervals, whether or not there is key input from the user (step S12). When the key-detection unit 302 determines that there is key input from the user, the key-detection unit 302 then determines whether or not that key-input data is input from the setting key 161c indicating to set the programming starting time (step S13).

At this time, If the key-detection unit 302 determines that the input key-input data is input from the setting key 161c indicating setting of the programming starting time, and notifies the program-programming-setting unit 303 of that, the program-programming-setting unit 303 stores the time where the cursor is located in the memory 165 as the programming starting time, and has the OSD 146 generate video data for which that programming starting time is set (step S14).

On the other hand, if the key-detection unit 302 determines that the input key-input data is not input from the setting key 161c indicating setting of the programming starting time, the key-detection unit 302 determines whether or not the input key-input data is input from an UP/DOWN key 161a (step S15).

At this time, if the key-detection unit 302 determines that the input key-input data is input from an UP/DOWN key 161a and notifies the program-programming-setting unit 303 of that, the notified program-programming-setting unit 303 has the OSD 146 generate video data in which the cursor has been moved to the previous day or the next day, and has the key-detection unit 302 execute the process of step S12 (step S16).

On the other hand, if the key-detection unit 302 determines that the input key-input data is not input from an UP/DOWN key 161a, it determines whether or not the input key-input data is input from a LEFT/RIGHT key 161b (step S17). At this time, if the key-detection unit 302 determines that the input key-input data is not input from a LEFT/RIGHT key 161b, the key-detection unit 302 returns to the process of step S12.

If the key-detection unit 302 determines that the input key-input data is input from a LEFT/RIGHT key 161b and notifies the program-programming-setting unit 303 of that, the program-programming-setting unit 303 has the OSD 146 generate video data inwhich the cursor is moved in a 15-minute increment, and has the key-detection unit 302 execute the process of step S12 (step S18).

Next, the key-detection unit 302 determines at specified time intervals whether or not there is key input from the user (step S19), and when the key-detection unit 302 determines that there is key input from the user, the key-detection unit 302 then determines whether or not that key-input data is input from the setting key 161c for setting the programming ending time (step S20).

At this time, if the key-detection unit 302 determines that the input key-input data is input from the setting key 161c for setting the programming ending time, the key-detection unit notifies the program-programming-setting unit 303 of that, the program-programming-setting unit 303 stores the time where the cursor is located in the memory 165 as the programming ending time, and has the OSD 146 generate video data in which that programming ending time is set, and then moves to the process of step S28 (step S21).

On the other hand, when the key-detection unit 302 determines that the input key-input data is not input from the setting key 161c for setting the programming ending time, the key-detection unit 302 determines whether or not that input key-input data is input from an UP/DOWN key 161a (step S22).

Here, if the key-detection unit 302 determines that the input key-input data is not input from an UP/DOWN key 161a, the key-detection unit 302 moves to the process of step S26.
on the other hand, the key-detection unit 302 determines that the input key-input data is input from an UP/DOWN key 161a, the key-detection unit 302 notifies the program-programming-setting unit 303 of that, and the notified program-programming-setting unit 303 determines whether or not the time where the cursor is located is the programming starting time (step S23).

At this time, if the program-programming-setting unit 303 determines that the time indicated by the cursor is the programming starting time, the program-programming-setting unit 303 moves the cursor located at the programming starting time in a 1-minute increment, then stores the time where the cursor is located in the memory 165 as the programming starting time, and has the OSD 146 generate that video data, and has the key-detection unit 302 execute the process of step S19 (step S24).

On the other hand, when the program-programming-setting unit 303 determines that the time indicated by the cursor is not the programming starting time, the program-programming-setting unit 303 has the OSD 146 generate video data that moves the cursor in 1-minute increments for setting the programming ending time, and has the key-detection unit 302 execute the process of step S19 (step S25).

Details of the process of step S25 of this embodiment of setting the programming ending time (hereafter, referred to as the first programming-ending-time-setting process) will be described later.

Next, if the key-detection unit 302 determines that the input key-input data is not input from an UP/DOWN key 161a, the key-detection unit 302 determines whether or not that input key-input data is input from a LEFT/RIGHT key 161b (step S26) . Next, if the key-input detection unit determines that the input key-input data is not input from a LEFT/RIGHT key 161b, the key-input detection unit 302 executes the process of step S19.

The other hand, if the key-detection unit 302 determines that the input key-input data is input from a LEFT/RIGHT key 161b and it notifies the program-programming-setting unit 303 of that, the notified program-programming-setting unit 303 has the OSD 146 generate video data that moves the cursor in a 15-minute increment, and has the key-detection unit 302 execute the process of step S19 (step S27).

Moving this cursor can be performed within the range going back to the programming starting time.

Details of the process of step S27 of this embodiment of setting the programming ending time (hereafter, referred to as the second programming-ending-time-setting process) will be described later.

Lastly, based on the set programming starting time and programming ending time, the program-programming-setting unit 303 performs recording of the broadcast program supplied from the preset channel onto the preset recording medium (step S28).

At this time, the program-programming-setting unit 303 controls the data-recording system 120 by way of the system-control unit 166, and performs recording of the set broadcast program.

In this way, in this embodiment, it is possible to set the programming starting time and programming ending time with the program-programming-setting unit 303, and when setting the programming starting time and programming ending time, programming can be performed easily and accurately.

In this embodiment when reproducing the recorded broadcast program that is recorded on the recording medium, the user performs control using the control unit 163 and controls the data-reproduction system 140 by way of the system-control unit 166 to reproduce the recorded broadcast program.

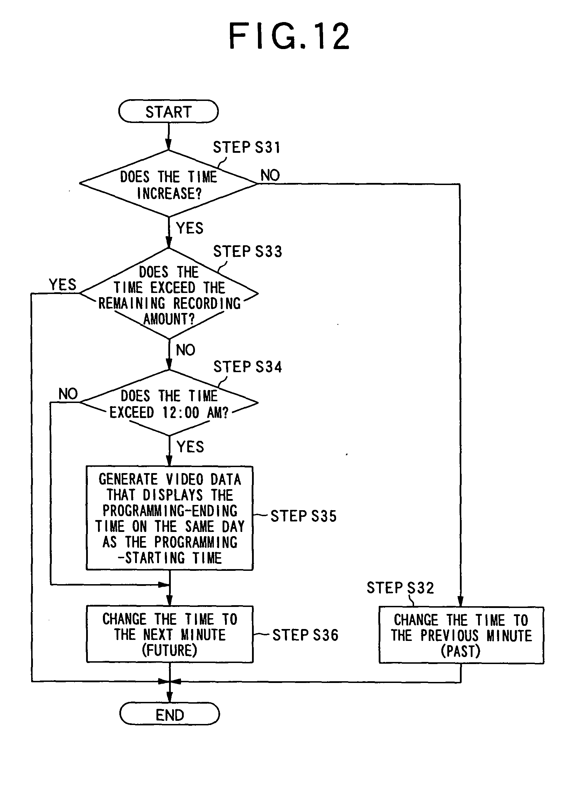

Next, Fig. 12 will be used to explain the operation of the first programming-starting-time-setting process of step S25 of this embodiment.

Fig. 12 is a flowchart showing the operation of the first programming-starting-time-setting process of step S25 of this embodiment.

First, if the key-detection unit 302 detects key-input data, the program-programming-setting unit 303 determines whether or not the key input from the UP/DOWN key 161a increases the time from the time indicated by the current cursor (step S31).

More specifically, based on the detection result from the key-detection unit 302, the program-programming-setting unit 303 determines whether or not the key of the UP/DOWN keys 161a that increases the time, for example the key pointing upward (hereafter, called the UP key) is pressed.

At this time, if the program-programming-setting unit determines that the time is not increased from the time indicated by the current cursor, the program-programming-setting unit 303 sets the time to one minute before the time indicated by the current cursor (step S32), and ends this operation.

On the other hand, if the program-programming-setting unit 303 determines that the time is increased from the time indicated by the current cursor, the program-programming-setting unit 303 determines whether or not the time resulting by adding one minute to the time from the programming starting time to the time indicated by the current cursor exceeds the remaining recording amount for the recording medium that is detected beforehand (step S33). At this time, if the program-programming-setting unit 303 determines that the time resulting by adding one minute to the time from the programming starting time to the time indicated by the current cursor exceeds the remaining recording amount for the recording medium that is detected beforehand, the program-programming-setting unit 303 does not add one minute to the time indicated by the cursor, and ends this operation.

If the program-programming-setting unit 303 determines that the time resulting by adding one minute to the time from the programming starting time to the time indicated by the current cursor does not exceed the remaining recording amount for the recording medium that is detected beforehand, the program-programming-setting unit 303 determines whether or not the time indicated by the cursor is the next day, or in other words, whether or not it exceeds 12:00 am on the next day after the programming starting time (step S34). At this time, if the program-programming-setting unit 303 determines that the time indicated by the cursor does not exceed 12:00 am on the next day after the programming starting time, the program-programming-setting unit 303 moves directly to step S36.

On the other hand, if the program-programming-setting unit 303 determines that the time indicated by the cursor exceeds 12:00 am on the next day after the programming starting time, the program-programming-setting unit 303 has video data generated that displays the time indicated by the cursor, which is after 12:00 am on the next day, on the program-programming table on the same day as the programming starting time (step S35).

Next, the program-programming-setting unit 303 adds one minute to the time indicated by the cursor, and has the OSD 146 generate that video data, then ends this operation (step S36).

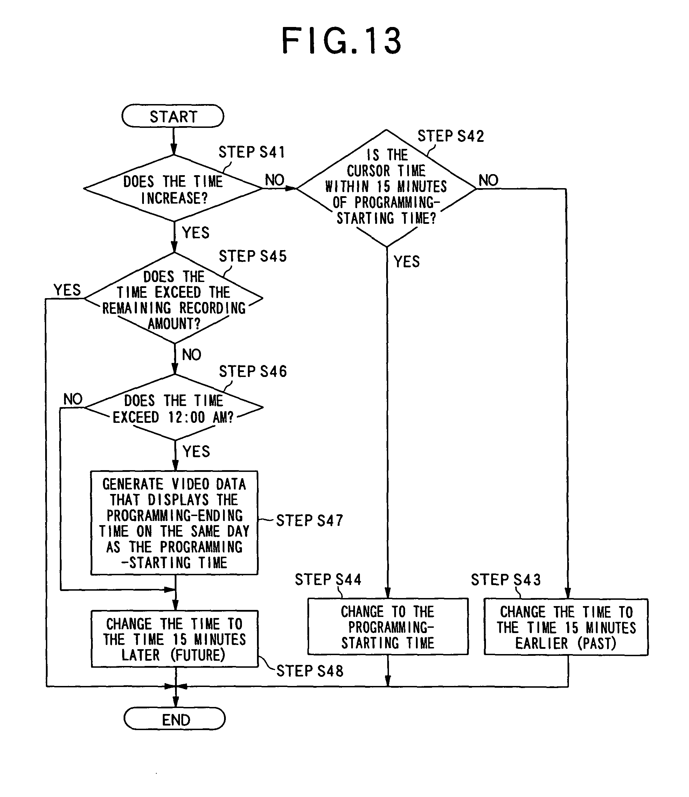

Next, Fig. 13 will be used to explain the operation of the second programming-starting-time-setting process of step S27 of this embodiment.

Fig. 13 is a flowchart showing the operation of the second programming-starting-time-settingprocess of step S27 of this embodiment.

First, if the key-detection unit 302 detects key input from a LEFT/RIGHT key 161b, the program-programming-setting unit 303 determines whether or not the time increases from the time indicated by the current cursor (step S41).

If the program-programming-setting unit determines that the time does not increase from the time indicated by the current cursor, the program-programming-setting unit 303 determines whether or not the time indicated by the current cursor is within 15 minutes of the programming starting time (step S42).

At this time, if the program-programming-setting unit 303 determines that the time indicated by the current cursor is not within 15 minutes of the programming starting time, the program-programming-setting unit 303 changes the cursor time to 15 minutes before the time indicated by the current cursor, and has the OSD 146 generate that video data, then ends this operation (step S43).

On the other hand, if the program-programming-setting unit 303 determines that the time indicated by the current cursor is within 15 minutes of the programming starting time, the program-programming-setting unit 303 changes the cursor time to the programming starting time, and has the OSD 146 generate that video data, then ends this operation (step S44).

If the program-programming-setting unit 303 determines that the time increases from the time indicated by the current cursor, the program-programming-setting unit determines whether or not the time resulting from adding 15 minutes to the time from the programming starting time to the time indicated by the current cursor exceeds the remaining recording amount for the recording medium that is detected beforehand (step S45). Here, if the program-programming-setting unit 303 determines that the time resulting from adding 15 minutes to the time from the programming starting time to the time indicatedby the current cursor exceeds the remaining recording amount for the recording medium, the program-programming-setting unit 303 does not add 15 minutes to the time indicated by the cursor, and ends this operation.

Also, when the program-programming-setting unit 303 determines that the time resulting from adding 15 minutes to the time from the programming starting time to the time indicated by the current cursor does not exceed the remaining recording amount for the recording medium, the program-programming-setting unit 303 determines whether or not the time indicated by the current cursor is the next day, or in other words, whether or not it is after 12: 00 am on the next day after the programming starting time (step S46). Here, if the program-programming-setting unit 303 determines that the time indicated by the cursor is not after 12 :00 am on the next day after the programming starting time, the program-programming-setting unit 303 moves to the process of step S48.

On the other hand, if the program-programming-setting unit 303 determines that the time indicated by the cursor is after 12:00 am on the next day after the programming starting time, the program-programming-setting unit 303 has OSD 146 generate video data that displays the time after 12:00 am on the day after the day indicated by the cursor on the same day as the programming starting time (step S47).

Lastly, the program-programming-setting unit 303 adds 15 minutes to the time indicated by the cursor and has the OSD 146 generate video data that displays the time after 12 : 00 am on the next day on the programming table for the same day as the programming starting time, then ends this operation (step S48).

With the embodiment described above, the data-recording/reproduction apparatus 100 comprises: a control unit 163 for entering date/time data that includes at least date data that indicates the date that contents data will be distributed, starting-time data that indicates the time when distribution of the contents data will start, or ending-time data that indicates the time when distribution will end, and that sets the date and time data; a setting key 161c that is located on the control unit 163 and used for setting at least the input date data; and at least UP/DOWN keys 161a that are located on the control unit 163 and used for entering at least the starting-time data or ending-time data after the date data is set.

With this kind of construction, when entering the date/time data, the data-recording/reproduction apparatus 100 of this embodiment is capable of setting the date data, and it is possible to enter the date data using the UP/DOWN keys 161a. Also, with the data-recording/reproduction apparatus 100 of this embodiment it is possible to enter at least the starting-time data or ending-time data after the date data is set.

Therefore, with just one key, it is possible to enter both the date data and time data, so the input device can be constructed using a simple method, and it is possible to easily and accurately enter the date/time data. As a result, it is possible to provide the user with an apparatus that has excellent operability and convenience.

Also, the data-recording/reproduction apparatus 100 of this embodiment further comprises LEFT/RIGHT keys 161b that are located on the control unit 163 and are used for entering at least starting-time data or ending-time data, and these LEFT/RIGHT keys 161b change the time by a different time increment than the UP/DOWN keys 161a, and are used for entering at least the starting-time data or ending-time data.

With this construction, the data-recording/reproduction apparatus 100 of this embodiment is able to change the starting-time data or ending-time data using a different time increment than the UP/DOWN keys 161a and set it. Therefore, the input device can be constructed using a simple method. As a result, the date/time data can be entered easily and accurately, and it is possible to provide the user with an apparatus that has excellent operability and convenience.

Moreover, in the data-recording/reproduction apparatus 100 of this embodiment, the LEFT/RIGHT keys 161b are used for changing the starting-time data or ending-time data using a time increment that is larger than that of the UP/DOWN keys 161a.

With this construction of the data-recording/reproduction apparatus 100 of this embodiment, by using keys having different time increments, it is possible to enter the date/time data easily and accurately. Therefore, it is possible to provide the user with an apparatus that has excellent operability and convenience.

Also, in the data-recording/reproduction apparatus 100 of this embodiment, when entering the starting-time data or ending-time data, the LEFT/RIGHT keys 161b and UP/DOWN keys 161a comprise a forward-feed unit that advances the input time in the forward direction, and a reverse-feed unit that changes the input time in the reverse direction.

With this construction, the data-recording/reproduction apparatus 100 of this embodiment is capable of entering the date/time data quickly using simple construction.

Also, the data-recording/reproduction apparatus 100 of this embodiment comprises: a control unit 163 for setting date data and time data if date/time data are input, including date data that indicates the date when contents data is distributed, and at least starting-time data that indicates the time when distribution of the contents data starts, or ending-time data that indicates the time when distribution ends; a program-programming-setting unit 300 and OSD 146 that create video data for notifying of daily date/time data corresponding to the input date/time data; and a system-control unit 166 that performs control of at least recording or reproduction of the distributed contents based on the set date/time data; and wherein when the programming-ending time is input and the date of the programming ending time is different from that of the set programming-starting time, the program-programming-setting unit 300 and OSD 146 generate video data for displaying the programming-ending time together with the display for the day of the programming-starting time.

With this construction, when the programming-ending time is input and that programming-ending time is on a different day than that of the set programming-starting time, the data-recording/reproduction apparatus 100 of this embodiment creates video data that displays the programming-ending time on the same day as the day of the programming-starting time.

By having a display device that externally displays this video data, it is possible to visually provide the user with the programming status using a simple method. Therefore, it is possible to input date/time data easily and accurately. As a result, it is possible to provide the user with an apparatus that has excellent operability and convenience.

Moreover, the data-recording/reproduction apparatus 100 of this embodiment comprises: a control unit 163 for setting date data and time data when date/time data are input, including date data that indicates the date when contents data is distributed, and at least starting-time data that indicates the time when distribution of the contents data starts, or ending-time data that indicates the time when distribution ends; a program-programming-setting unit 300 and OSD 146 that generate video data for notifying of daily date/time data corresponding to the input date/time data; a system-control unit 166 performs control such that the contents data are recorded on a recording medium; and a remaining-recording-amount-detection unit 304 that detects remaining-recording-amount data that indicates the remaining recordable amount on the recording medium; and wherein the program-programming unit 300 restricts input of the date/time data by the control unit 163 based on the detected remaining-recording-amount data.

With this construction, the data-recording/reproduction apparatus 100 of this embodiment detects the remaining-recording-amount data that indicates the remaining recordable amount on the recording medium, and restricts input of the date/time data by the control unit 163 based on that detected remaining-recording-amount data.

When the recording time for recording the contents data onto the recording medium is less than the recordable time for the recording medium, it is possible to determine whether or not the contents data can be recorded onto the recording medium by a simple method. Therefore, the date/time data can be input easily and accurately. As a result, it is possible to provide the user with an apparatus that has excellent operability and convenience.

Moreover, the data-recording/reproduction apparatus 100 of this embodiment is constructed such that the program-programming-setting unit 300 and OSD 146 generate video data, which includes date/time data, having a timeline for each day.

With this construction, the data-recording/reproduction apparatus 100 of this embodiment is able to visibly provide the user with the programming status using a simple method by a display device that displays this video data externally. Therefore, the date/time data can be input easily and accurately. As a result, it is possible to provide the user with an apparatus that has excellent operability and convenience.

The contents data that are recorded on the recording media can be just video data, or can also be just audio data.

Also, program programming is performed with the data-recording/reproduction apparatus 100 described above. However, it is also possible for the data-recording/reproduction apparatus 100, having a recording medium and recording apparatus for recording a broadcast program, to comprise a computer and data-recording medium. The data-recording/reproduction apparatus 100 performs the same operations as described above by storing programs on this data-recording medium for performing the program-programming-setting operations described above, and reading these programs by the computer.

Moreover, in this embodiment, programming is performed for recording a set broadcast program onto a HD 200 or DVD 202 at the distribution time set by the program-programming-data-setting unit 300. However, it is also possible to perform reproduction programming for simply reproducing a broadcast program at the set time without recording that set broadcast program onto a HD 200 or DVD 202.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A data-programming-control apparatus (100) which controls the programming of at least one of recording and reproduction of contents data, which contains at least one of video data and audio data, distributed on preset date and time, said data-programming-control apparatus (100) **characterized by**:
an input device (161, 163) which is used for entering date data indicating the date when the contents data is distributed, and time data which indicates at least one of starting-time when distribution of the contents data starts and ending-time when distribution of the contents data ends, and which is used for setting at least one of the date data and the time data;
a setting key (161c) which is located on said input device (161, 163) and which is used for setting the input date data; and
a date/time-data-input key (161a) which is located on said input device (161, 163) , and which is used for entering the date data and the time data which indicates at least one of the starting-time and the ending-time after the date data is set.

2. The data-programming-control apparatus (100) according to claim 1, further comprising
a time-input key (161b) which is located on said input device (161, 163), and which used for entering at least one of the starting-time and the ending-time, and wherein
said time-input key (161b) is used for changing the time at a different interval from the one at which the time is changed by a time-date-input key(161a).

3. The data-programming-control apparatus (100) according to claim 2, wherein
said time-input key (161b) is used for changing the time at a greater interval than the one at which the time is changed by a time-date-input key (161a).

4. The data-programming-control apparatus (100) according any one claims 1 to 3, in a case where said input device (161, 163) has a data-input key (161, 163) which is used for entering at least one of the starting-time data and the said ending-time data, wherein
said data-input key (161, 163) comprise: a forward-feed unit(161a, 161b) which advances the input time in the forward direction when entering at least one of the starting-time data and the ending-time data; and a reverse-feed unit (161a, 161b) which put back the time in the reverse direction when entering at least one of the starting-time data and the ending-time data.

5. The data-programming-control apparatus (100) according to any one claims 1 to 4, further comprising:
an image data-generating device (146, 300) which generates the image data for notification of date/time data which correspond to the input date/time data during the date/time data are input; and
a recording-control device (300) which controls the recording of the distributed contents data based on the set date/time data.

6. A data-programming-control apparatus (100) which controls the programming of at least one of recording and reproduction of contents data, which contains at least one of video data and audio data, distributed on preset date and time, said data-programming-control apparatus (100) **characterized by**:
an input device (161, 163) which is used for entering date data indicating the date when the contents data is distributed, and time data which indicates at least one of starting-time when distribution of the contents data starts and ending-time when distribution of the contents data ends, and which is used for setting at least one of the date data and the time data;
an image data-generating device (146, 300) which generates image data put in date order for notification of date/time data which correspond to the input date/time data during the date/time data are input; and
a control device (300) which controls at least one of the recording and reproduction of the distributed contents data based on the set date/time data; and wherein
when the programming-ending time is input and the programming-ending time is on a different date form the set programming-starting time, said image data-generating device (146, 300) generates image data for displaying the programming-ending time, joined to a graphic one-day-data where the programming-starting time is.

7. A data-programming-control apparatus (100) which controls the programming of at least one of recording and reproduction of contents data, which contains at least one of video data and audio data, distributed on preset date and time, said data-programming-control apparatus (100) **characterized by**:
an input device (161, 163) which is used for entering date data indicating the date when the contents data is distributed, and time data including at least one of starting-time data which indicates time when distribution of the contents data starts and ending-time data which indicates time when distribution of the contents data ends, and which is used for setting at least one of the date data and the time data;
an image data-generating device (146, 300) which generates image data for notification of date/time data corresponding to the input date/time data when the date/time data are input;
a control device (300) which controls the recording of the distributed contents data onto a recording medium based on the set date/time data;
a detection device (300) which detects remaining-recording-amount data that indicates the remaining recordable amount of said recording medium; and
a restriction device (300) which restricts the input of date/time data by said input device (161, 163) based on the detected remaining-recording-amount data.

8. The data-programming-control apparatus (100) according to claim 6 or 7, wherein
said image data-generating device (146, 300) generates image data, which has timelines for each date, and for displaying the input date/time data.

9. A data-programming-control method for controlling the programming of at least one of recording and reproduction of contents data, which contains at least one of video data and audio data, distributed on preset date and time, said data-programming-control method **characterized by**:
a first input process of setting date data indicating the date when the contents data is distributed in a case where the date data is input; and
a second input process of setting time data which indicates at least one of starting-time when distribution of the contents data starts and ending-time when distribution of the contents data ends in a case where the time data is input after the date data is set.

10. A data-programming-control method for controlling the programming of at least one of recording and reproduction of contents data, which contains at least one of video data and audio data, distributed on preset date and time, said data-programming-control method **characterized by**:
an input process of setting date data indicating the date when the contents data is distributed, and time data which indicates at least one of starting-time when distribution of the contents data starts and ending-time when distribution of the contents data ends, in a case where the date data and the time data are input;
an image data-generating process of generating image data put in date order for notification of date/time data which correspond to the input date/time data during the date/time data are input; and
a control process of controlling at least one of the recording and reproduction of the distributed contents data based on the set date data and time date; and wherein
said image data-generating process generates image data for displaying the programming-ending time, joined to the graphic one-day-data where the programming-starting time is, in a case where the programming-ending time is on a different date form the set programming-starting time.

11. A data-programming-control method for controlling the programming of at least one of recording and reproduction of contents data, which contains at least one of video data and audio data, distributed on preset date and time, said data-programming-control method **characterized by**:
an input process of setting date data indicating the date when the contents data is distributed, and time data which indicates at least one of starting-time when distribution of the contents data starts and ending-time when distribution of the contents data ends, in a case where the date/time data are input;
an image data-generating process of generating image data put in date order for notification of date/time data which correspond to the input date/time data during the date/time data are input;
a control process of controlling at least one of the recording and reproduction of the distributed contents data based on the set date data and time date; and
a detection process of detecting remaining-recording-amount data which indicates the remaining recordable amount of said recording medium, wherein
said input process restricts the input of data based on the detected remaining-recording-amount data during the date/time data are input.

12. A recorded medium wherein a data programming control program is recorded so as to be read by a computer, the computer included in a data-programming-control apparatus (100) for controlling the programming of at least one of recording and reproduction of contents data, which contains at least one of video data and audio data, distributed on preset date and time, said data programming control program being **characterized by** causing the computer to function as:
a first input setting device (300) which sets date data indicating the date when the contents data is distributed in a case where the date data is input; and
a second input setting device (300) which sets time data which indicates at least one of starting-time when distribution of the contents data starts and ending-time when distribution of the contents data ends in a case where the time data is input after the date data is set.

13. A recorded medium wherein a data programming control program is recorded so as to be read by a computer, the computer included in a data-programming-control apparatus (100) for controlling the programming of at least one of recording and reproduction of contents data, which contains at least one of video data and audio data, distributed on preset date and time, said data programming control program being **characterized by** causing the computer to function as:
an input setting device (300) which sets date data indicating the date when the contents data is distributed, and time data which indicates at least one of starting-time when distribution of the contents data starts and ending-time when distribution of the contents data ends, in a case where the date data and the time data are input;
an image data-generating device (146, 300) which generates image data put in date order for notification of date/time data which correspond to the input date/time data during the date/time data are input; and
a control device (300) which controls at least one of the recording and reproduction of the distributed contents data based on the set date/time data; and wherein
said image data-generating device (146, 300) generates image data for displaying the programming-ending time, joined to the graphic one-day-data where the programming-starting time is, in a case where the programming-ending time is on a different date form the set programming-starting time.

14. A recorded medium wherein a data programming control program is recorded so as to be read by a computer, the computer included in a data-programming-control apparatus (100) for controlling the programming of at least one of recording and reproduction of contents data, which contains at least one of video data and audio data, distributed on preset date and time, said data programming control program being **characterized by** causing the computer to function as:
an input setting device (300) which sets date data indicating the date when the contents data is distributed, and time data which indicates at least one of starting-time when distribution of the contents data starts and ending-time when distribution of the contents data ends, in a case where the date/time data are input;
an image data-generating device (146, 300) which generates image data put in date order for notification of date/time data which correspond to the input date/time data during the date/time data are input;
a control device (300) which controls at least one of the recording and reproduction of the distributed contents data based on the set date data and time date; and
a detection device (300) which detects remaining-recording-amount data which indicates the remaining recordable amount of said recording medium, wherein
said input setting device (300) restricts the input of date/time data based on the detected remaining-recording-amount data during the date/time data are input.
